# EUROPEAN PATENT APPLICATION

(11) **EP 2 654 305 A2**
(43) Date of publication of application: **23.10.2013**
(21) Application number: 11849201.6
(22) Date of filing: 12.12.2011
(51) Int. Cl.: H04N 13/00, H04N 7/24

(54) **SIGNALING METHOD FOR A STEREOSCOPIC VIDEO SERVICE AND APPARATUS USING THE METHOD**

(30) Priority: 13.12.2010 KR 20100127220; 12.12.2011 KR 20110132688
(71) Applicant: Electronics And Telecommunications Research Institute, Daejeon-si 305-700 (KR)
(72) Inventor: LEE, Bong Ho, Daejeon-si 305-747 (KR); YUN, Kug Jin, Daejeon-si 305-759 (KR); CHEONG, Won Sik, Daejeon-si 305-761 (KR); LEE, Eung Don, Daejeon-si 305-761 (KR); JEONG, Se Yoon, Daejeon-si 306-769 (KR); AHN, Sang Woo, Daejeon-si 305-761 (KR); LIM, Young Kwon, Goyang-si Gyeonggi-do 410-050 (KR); HUR, Nam Ho, Daejeon-si 305-768 (KR); LEE, Soo In, Daejeon-si 302-772 (KR); CHOI, Jin Soo, Daejeon-si 305-750 (KR); KIM, Jin Woong, Daejeon-si 305-761 (KR)
(74) Representative: Betten & Resch
(86) International application number: PCT/KR2011/009546
(87) International publication number: WO 2012/081874

(57) **Abstract**

Disclosed are a signaling method for a stereoscopic video service and an apparatus using the method. An image decoding method comprises: a step of determining a field value based on a broadcast service type and a display mode in decoding a program level descriptor; and a step of determining an encoded stream type, whether an elementary stream is a reference stream, whether the elementary stream is a left-eye image or a right-eye image, additional image upsampling information and information on a subsampled line. Thus, efficiency of encoding/decoding an additional image for a stereoscopic video content may increase.

## Description

### [Technical Field]

The present invention relates to a signaling method for stereoscopic videoservices and an apparatus using the same method, and more particularly, to a decoding method and a decoding apparatus.

### [Background Art]

Human being receives 80% or more of information through eyes. The information transfer through vision occupies a very important weight in human. A stereoscopic video, which is a video providing a sense of realism as human being can feel in reality, provides depth perception and presence together to a two-dimensional video. As a method for providing the information, a three-dimensional stereoscopic technology such as depth-map information and stereoscopic videos has been developed. The depth-map information shows the stereoscopic effect using the depth information at a two-dimensional video, but has a difficulty in obtaining the accurate depth information. As a result, the depth-map information has not yet been widely used.

Left and right two-dimensional videos captured by a stereoscopic camera enter user eyes as different videos due to disparity of left and right eyes and recognized as three dimensional videos by a brain, such that the user can feel a three-dimensional effect of the stereoscopic video during a process feeling a sense of distance. A method for constructing left and right videos of stereoscopic videos is very diversified. However, as a method that is the most frequently used in a market, there are largely methods based on a single elementary stream (ES) or two elementary streams. The video construction method based on the single elementary stream is a method for configuring left and right videos as a single compound image through side-by-side, line interleaved, frame sequential, or the like, and the video construction method based on two elementary streams is a method for constructing left and right videos, respectively, as independent streams.

At present, the stereoscopic video has been applied for various devices such as a mobile terminal, a television, or the like. However, a common file format for storing the stereoscopic video and a transmission protocol for transmitting the stereoscopic video are not defined, which cause a problem of the use spread of the corresponding stereoscopic video.

In order to solve the above problems, International Standard Organization, MPEG processes and transmit the depth-map information video of the stereoscopic video by a single additional data rather than by a video through establishment of standard called "Auxiliary data over MPEG-2 Transport Stream". In addition, a market of more various stereoscopic contents can be spread by compatibility between contents through establishment of "Stereoscopic video Application Format" that is a common storage format standard for storing stereoscopic contents. However, the above-mentioned standards, which are a standard for differentiating a file format and a depth-map information video for storing stereoscopic contents, has a limitation in transmitting the stereoscopic contents constructed through one or two elementary streams, in particular, applying for an MPEG-2 transmission stream (TS) that is a digital broadcast transmission environment.

The existing MPEG-2 transmission stream is devised to transmit a two-dimensional video constructed by the single elementary stream based on the 2D video. Therefore, the method for constructing a stereoscopic video constructed by left and right videos as two independent elementary streams, respectively, has a limitation in transmitting the stereoscopic videos with the existing MPEG-2 transmission stream. In addition, when the stereoscopic video is constructed by the single elementary stream, the left and right videos are compounded so as to be constructed by the single video and thus, the stereoscopic video can be transmitted by the existing MPEG-2 transmission stream but the construction information of the transmitted compound image cannot be grasped, which results in a limitation in recognizing and processing construction information of the transmitted compound image as the 2D video rather than as the stereoscopic video.

### [Disclosure]

### [Technical Problem]

The present invention provides a decoding method of stereoscopic video contents.

In addition, the present invention provides an apparatus for performing a decoding method of stereoscopic video contents.

### [Technical Solution]

In an aspect, there is provided a video decoding method including: determining a field value according to a broadcast service type and a display mode in decoding a program level descriptor; and determining an encoded stream type, whether an elementary stream is a reference stream, whether the elementary stream is a left video or a right video, upsampling information of an additional video, and information on a sub-sampled line in decoding an elementary stream level descriptor. The video decoding method may further include determining whether a 2D broadcast service and a 3D broadcast service are mixed in decoding the program level descriptor and associating the reference video stream with the additional video stream based on PID information.

In another aspect, there is provided a video decoding method including: determining whether an elementary stream is a left video or a right video in decoding a reference video descriptor at an elementary stream level and determining upsampling information on an additional video and determining sub-sampling line information on an additional video in decoding an additional video descriptor at the elementary stream level. The video decoding method may further include determining whether the elementary stream is the left video or the right video in decoding the additional video descriptor at the elementary stream level. The video decoding method may further include determining the encoded stream type in decoding the additional video descriptor at the elementary stream level. The video decoding method may further include determining whether the elementary stream is the reference video stream or the additional video stream. The video decoding method may further include associating the reference video stream with the additional video stream based on PID information in decoding the additional video descriptor at the elementary stream level. The video decoding method may further include associating the reference video stream with the additional video stream based on the PID information in decoding the reference video descriptor at the elementary stream level, The video decoding method may further include determining whether the 2D broadcast service and the 3D broadcast service are mixed in decoding the additional video descriptor at the elementary stream level. The video decoding method may further include determining whether at least one of two elementary streams is transmitted to a separate channel in decoding the program level descriptor and decoding ID values of transmission streams including the elementary stream transmitted to the separate channel, and decoding a field value defining a program including the elementary stream transmitted to the separate channel. The video decoding method may further include determining whether the reference video stream is included in the current channel.

In another aspect, there is provided a decoding apparatus including: a demultiplexer decoding a program level descriptor and an elementary stream level descriptor, respectively, to demultiplex a left video packetized elementary stream (PES) packet, a right video PES packet, an audio PES packet and a PES depacketizer depacketizing the demultiplexed left video PES packet, right video PES packet, and audio PES packet to generated a left video elementary stream, a right video elementary stream, and an audio elementary stream. The demultiplexer may perform demultiplexing by receiving field value information according to stream information displayed at the time of a broadcast service type and a display mode in the program level descriptor and receiving information on an encoded stream type, whether the elementary stream is a reference stream, whether the elementary stream is a left video or a right video, upsampling information on the additional video, and information on the sub-sampled line. The demultiplexer may determine whether the 2D broadcast service and the 3D broadcast service are mixed in the program level descriptor and associate the reference video stream with the additional video stream based the PID information in decoding the elementary stream level descriptor. The demultiplexer may determinine whether the elementary stream is the left video or the right video in decoding the reference video descriptor at the elementary stream level, the upsampling information on the additional video in decoding the additional video descriptor at the elementary stream level, and the sub-sampling line information on the additional video. The demultiplexer may determine whether the elementary stream is the left video or the right video in decoding the additional video descriptor at the elementary stream level. The demultiplexer may determinine whether the elementary stream is the reference video stream or the additional video stream. The demultiplexer may associate the reference video stream with the additional video stream based on PID information in decoding the reference video descriptor at the elementary stream level. The demultiplexer may be determine whether the 2D broadcast service and the 3D broadcast service are mixed in decoding the additional video descriptor at the elementary stream level. The demultiplexer may determine whether at least one of two elementary streams is transmitted to a separate channel in decode the program level descriptor and decoding ID values of transmission streams including the elementary stream transmitted to the separate channel and a field value defining a program including the elementary stream transmitted to the separate channel.

### [Advantageous Effects]

As set forth above, the signaling method for stereoscopic video service and the apparatus using the method according to the exemplary embodiments of the present invention can provide the stereoscopic services to the existing signaling method using the additional descriptor information.

### [Description of Drawings]

FIG. 1 is a flow chart showing a method of encoding and decoding a program level descriptor according to an exemplary embodiment of the present invention.
FIG. 2 is a flow chart showing a method of encoding and decoding an ES level descriptor according to the exemplary embodiment of the present invention.
FIG. 3 is a flow chart showing a method of encoding and decoding the program level descriptor according to the exemplary embodiment of the present invention.
FIG. 4 is a flow chart showing a method of encoding and decoding the ES level descriptor according to the exemplary embodiment of the present invention.
FIG. 5 is a flow chart showing an elementary stream level descriptor according to the exemplary embodiment of the present invention.
FIG. 6 is a flow chart showing the elementary stream level descriptor according to the exemplary embodiment of the present invention.
FIG. 7 is a block diagram showing an apparatus for encoding stereoscopic videos by adding a descriptor according to another embodiment of the present invention.
FIG. 8 is a block diagram showing an apparatus for decoding stereoscopic videos by adding a descriptor according to another embodiment of the present invention.

### [Mode for Invention]

Hereinafter, exemplary embodiments of the present invention will be described in detail with reference to the accompanying drawings. In describing exemplary embodiments of the present invention, well-known functions or constructions will not be described in detail since they may unnecessarily obscure the understanding of the present invention.

It will be understood that when an element is simply referred to as being 'connected to' or 'coupled to' another element without being 'directly connected to' or 'directly coupled to' another element in the present description, it may be 'directly connected to' or 'directly coupled to' another element or be connected to or coupled to another element, having the other element intervening therebetween. Further, in the present invention, "comprising" a specific configuration will be understood that additional configuration may also be included in the embodiments or the scope of the technical idea of the present invention.

Terms used in the specification, 'first', 'second', etc. can be used to describe various components, but the components are not to be construed as being limited to the terms. The terms are only used to differentiate one component from other components. For example, the 'first' component may be named the 'second' component without being departed from the scope of the present invention and the 'second' component may also be similarly named the 'first' component.

Furthermore, constitutional parts shown in the embodiments of the present invention are independently shown so as to represent characteristic functions different from each other. Thus, it does not mean that each constitutional part is constituted in a constitutional unit of separated hardware or software. In other words, each constitutional part includes each of enumerated constitutional parts for convenience. Thus, at least two constitutional parts of each constitutional part may be combined to form one constitutional part or one constitutional part may be divided into a plurality of constitutional parts to perform each function. The embodiment where each constitutional part is combined and the embodiment where one constitutional part is divided are also included in the scope of the present invention, if not departing from the essence of the present invention.

In addition, some of constituents may not be indispensable constituents performing essential functions of the present invention but be selective constituents improving only performance thereof. The present invention may be implemented by including only the indispensable constitutional parts for implementing the essence of the present invention except the constituents used in improving performance. The structure including only the indispensable constituents except the selective constituents used in improving only performance is also included in the scope of the present invention.

The following Table 1 shows a structure of a program map table (PMT) that provides identification of programs and characteristics of encoding streams in a digital broadcast.

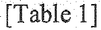

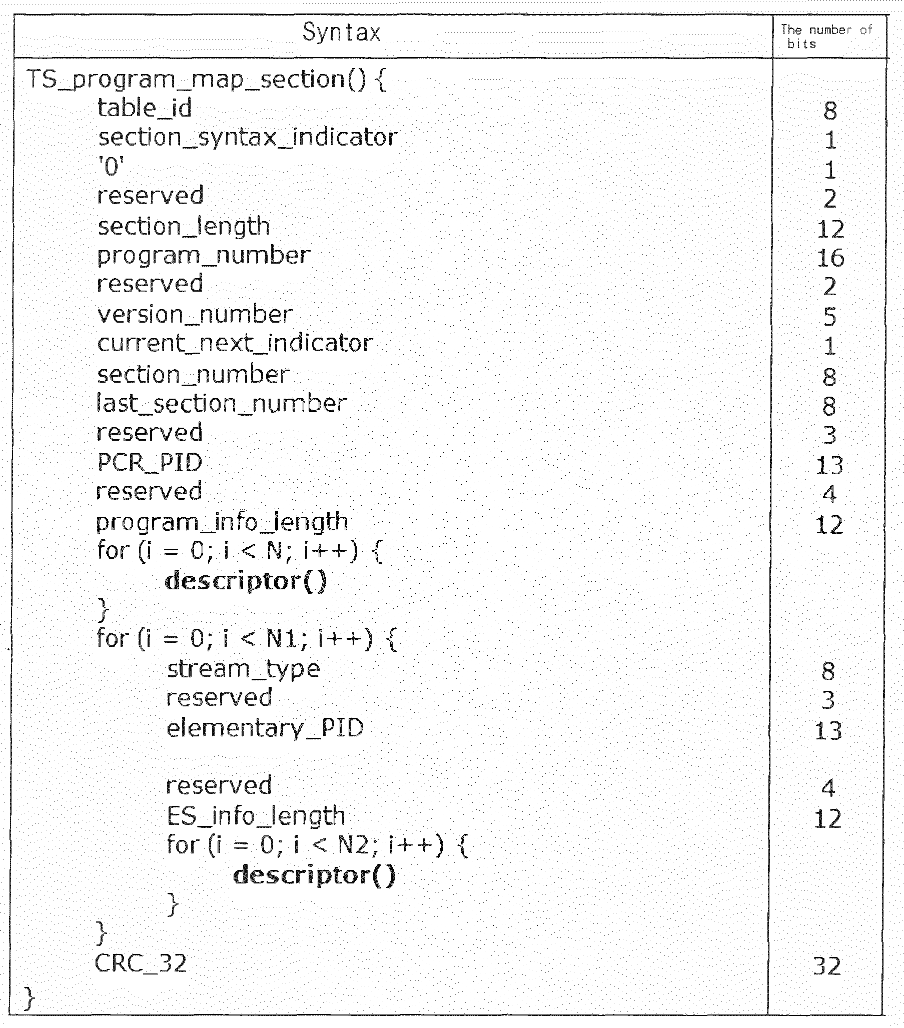

Referring to Table 1, additional information for providing stereoscopic services may be provided by using descriptor information in a program level and an ES level of a transmission stream.

The additional information for providing stereoscopic services using an additional descriptor is as follows.

Stereo_mono_servive_type: a field dividing a 2D/3D service type of a broadcast program. A meaning according to the service type is shown in the following Table 2.

**<Table 2>**

| Value | Description |
|---|---|
| 000 | Reserved |
| 001 | 2D service |
| 010 | Frame-compatible 3D service |
| 011 | Service-compatible 3D service |
| 100∼111 | reserved |

Referring to Table 2, when Stereo_mono_service_type is 001, the broadcast program provides 2D services, when Stereo_mono_service_type is 010, the broadcast program provides a frame-compatible 3D service, and when Stereo_mono_service_type is 011, the broadcast program provides a service-compatible 3D service.

The frame-compatible-3D service, which is a stereoscopic video (Example side by side, top/down, check board, or the like) service including left and right videos within a single frame, is a service that can be transmitted/received using the existing media, broadcast equipments and terminals. However, when the frame-compatible-3D service is received and reproduced in the existing 2D terminal, the left and right videos are displayed on a screen half and thus, cannot watch the 2D video having the same shape as the existing 2D broadcast.

The service-compatible service is provided to enable the existing 2D terminal to watch the 2D video having the same shape as the existing 2D broadcast when the stereoscopic video service is provided. As the example, there is a service provided by dividing the reference video and the additional video into a separate stream while maintaining the compatibility with the existing 2D medium or 2D broadcast (Example: transmitted by being encoded into a reference video MPEG-2 video, transmitted by being encoded into an additional video-AVC, or the like).

is_mixed_service is a field representing whether the 2D service and the 3D service are mixed within the same program. The case in which the is_mixed_service is '1' may represent that the 2D service and the 3D service are mixed and the case in which the is_mixed_service is '0' may represent that the 2D service and the 3D service are not mixed. The stereoscopic video service may be divided into a stereoscopic dedicated service (for example, showing a stereoscopic video based movie in a theater) providing only the stereoscopic video for serving time and a stereoscopic/2D video mixing service provided by mixing the stereoscopic video and the 2D video.

**2D_view_flag** is a field for receiving a 3D program in a 3DTV receiver to identify a video appropriate at the time of watching the received 3D program by a 2D display mode. The case in which the 2D_view_flag is '1' may display the reference video and the case in which the 2D_view_flag is '0' may display the additional video.

**coded_stream_type,** which is a field representing an encoding method for an additional video, may have stream_type value shown in Table 2-29 of ISO/IEC 13818-1 MPEG-2 Systems: 2007.

**base_video_flag** represents whether the corresponding ES is the reference video stream. The case in which the base_video_flag is 1' may represent that the corresponding stream represents the reference video and the case in which base_video_flag is '0' may represent that the corresponding stream is the additional video.

**view_flag** is a field dividing whether the corresponding ES is a left stream or a right stream. The case in which the view_flag is '1' may represent that the corresponding ES is the left video and the case in which the view_flag is '0' may represent that the corresponding stream is the right video.

**upsampling_factor,** which is a field representing information for upsampling for the additional video, may be defined as the following Table 3.

**[Table 3]**

| Value | Description |
|---|---|
| 000 | reserved |
| 001 | The same resolution of reference/additional image |
| 010 | The resolution of additional image is a 1/2 size in a horizontal direction convered with the reference image |
| 011 | The resolution of additional image is a 1/2 size in a vertical direction compared with the reference image |
| 100 | The resolution of additional image is a 1/2 size in vertical and horizontal directions |
| 101∼111 | Reserved |

**horizontal_subsampling_type** may represent the sub-sampled line as the following Table 4 when the resolution of the additional video is sub-sampled at a 1/2 size in a horizontal direction. stereoscopic_composition_type field may have a meaning when a value thereof is '01'0 or '100' and in other cases, the value thereof may be set to be '00'.

**[Table 4]**

| Value | Description |
|---|---|
| 00 | Sub-sampling is not performed |
| 01 | Even line sub-sampling in a horizontal direction |
| 10 | 0dd line sub-sampling in a horizontal direction |
| 11 | Reserved |

**vertical_subsampling_type** may represent the sub-sampled line as the following Table 5 when the resolution of the additional video is sub-sampled at a 1/2 size in a vertical direction. stereoscopic_composition_type field may have a meaning when a value thereof is '011' or '100' and in other cases, the value thereof may be set to be '00'.

**[Table 5]**

| Value | Description |
|---|---|
| 00 | Sub-sampling is not performed |
| 01 | Even line sub-sampling in a vertical direction |
| 10 | 0dd line sub-sampling in a vertical direction |
| 11 | Reserved |

**linked_elemenatry_stream_PID** may represent PID of the reference video stream corresponding to the additional video stream or may represent PID of the additional video stream corresponding to the reference video stream.

According to the exemplary embodiment of the present invention, a program level descriptor and an ES level descriptor are each configured as the following Tables 7 and 8 by using the above-mentioned syntax element information and may be signaled.

The following Table 7 is a table representing the program level descriptor.

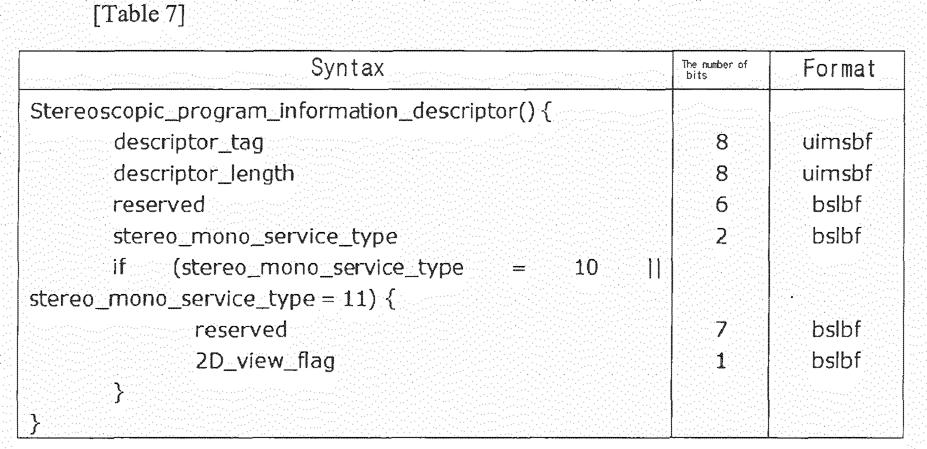

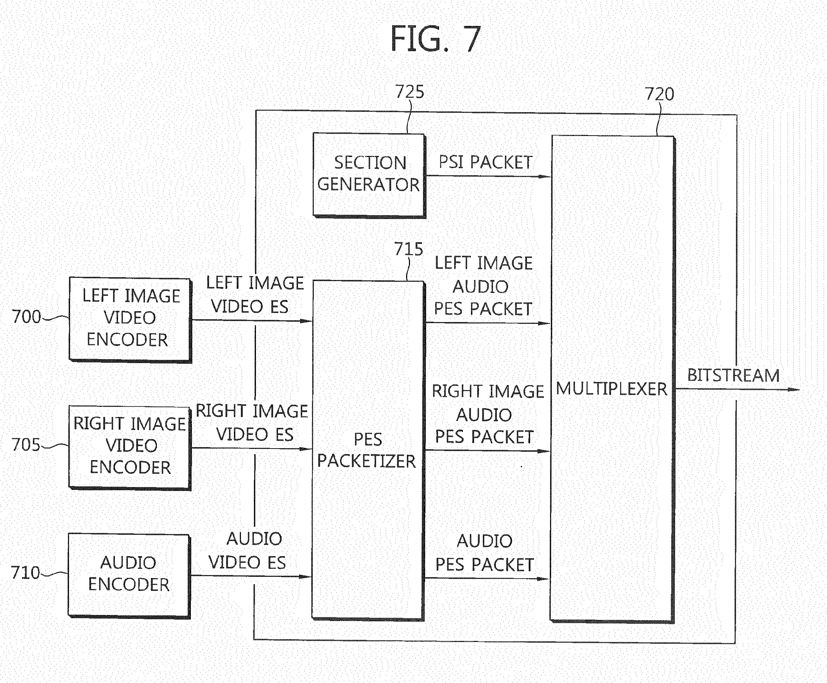

Referring to FIG. 7, the case in which the above-mentioned Stereo_mono_service_type is 10 or 11, that is, the case in which the frame type is the Frame-compatible 3D service or the Service-compatible 3D service and thus, is the frame providing the 3D service may define whether the reference video is displayed or the additional video is displayed at the time of displaying the 3D video received through the 2D_view_flag by 2D service.

The following Table 8 is a table representing the ES level descriptor. The ES level descriptor of Table 8 may be applied to both of the reference video and the additional video or may be applied to only the additional video.

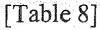

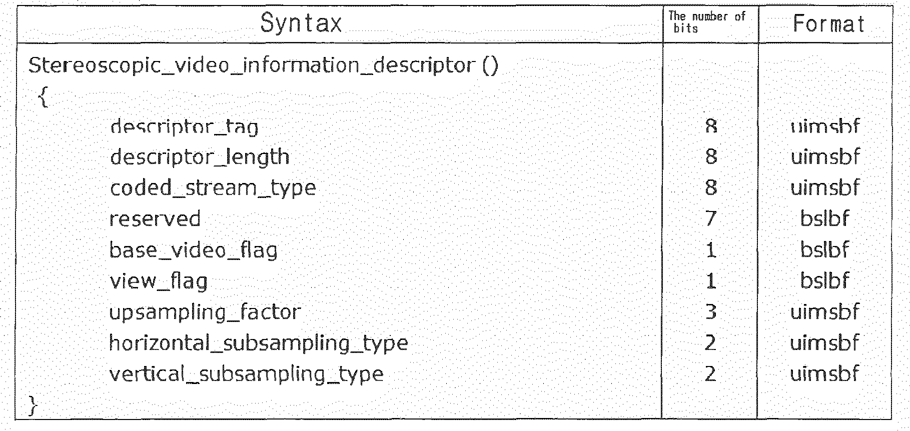

Referring to Table 8, the encoding and decoding method for an additional video using coded-stream-type may be represented, base_video_flag represents whether the corresponding ES is the reference video stream or the additional video stream is represented, and view_flag represents whether the ES is the left video stream or the video right stream.

As described above, upsampling_factor is a field representing the information for upsampling for the additional video, horizontal_subsampling_type represents the sampling line at the time of performing the resolution of the additional video at 1/2 sub-sampling in a horizontal direction, and vertical_subsampling_type represents the sampling line at the time of performing the resolution of the additional video at the time of 1/2 sub-sampling in a vertical direction.

That is, as shown in Table 8, the information on the sampling method of the sampling of the additional video may be encoded and decode by dividing the stream using the ES level descriptor.

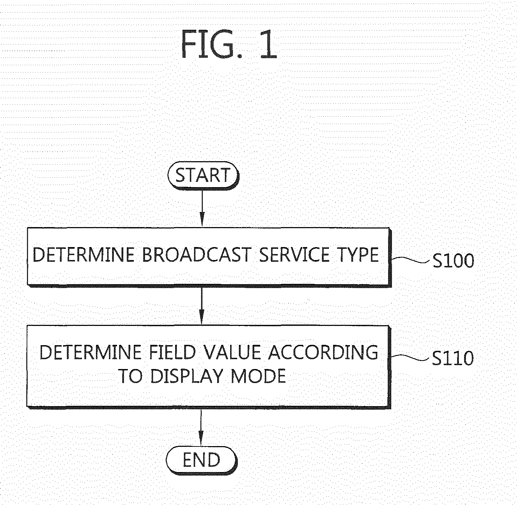

FIG. 1 is a flow chart showing a method of encoding and decoding the program level descriptor according to the exemplary embodiment of the present invention.

Hereinafter, a sequence of steps executed in a flow chart of the present invention is arbitrary and therefore, a sequence of steps may be changed unless departing from the scope of the present invention.

Referring to FIG. 1, the method determines a broadcast service type (S100).

The method determines whether the broadcast service type is the 2D service or the Frame-compatible 3D service or the Service-compatible 3D service by determining Stereo_mono_service_type.

The method determines the field value depending on the display mode (S110).

When the display of the 2D mode is performed based on the received 3D broadcast service contents, the method determines the field value determining whether the reference video is displayed or the additional video is displayed to output the corresponding video.

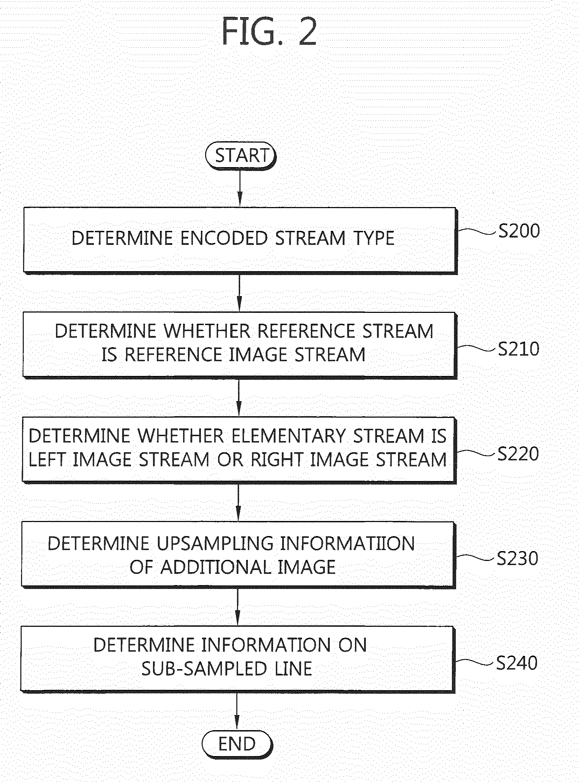

FIG. 2 is a flow chart showing a method of encoding and decoding the ES level descriptor according to the exemplary embodiment of the present invention.

Referring to FIG. 2, the method determines the encoded stream type (S200).

The method determines a method of encoding an additional video. The encoding method of the additional video may use the encoding method disclosed in ISO/IEC 13818-1 MPEG-2 Systems:2007.

The method determines whether the elementary stream is the reference video stream (S210).

The method represents whether the elementary stream is the reference video stream or the additional video stream.

The method determines whether the elementary stream is the left video stream or the right video stream (S220).

In the case of the stereoscopic video, the left video and right video streams may be present and the video information may be determined.

The method determines the upsampling information on the additional video (S230).

In order to perform the upsampling based on the additional video information transmitted by being down-sampled, the method may determine the information on whether or not to use any upsampling method.

The method determines the information on the sub-sampled line (S240).

The sub-sampling for the additional video may be sub-sampled in horizontal or vertical directions and when the sub-sampling is performed, the method may determine whether even or odd line is sub-sampled.

According to another exemplary embodiment of the present invention, the program level descriptor and the ES level descriptor are each configured as the following Tables 9 and 10 by using the above-mentioned syntax element information and may be signaled.

The following Table 9 is a table representing program_level_descriptor when the 2D service and the 3D service are mixed.

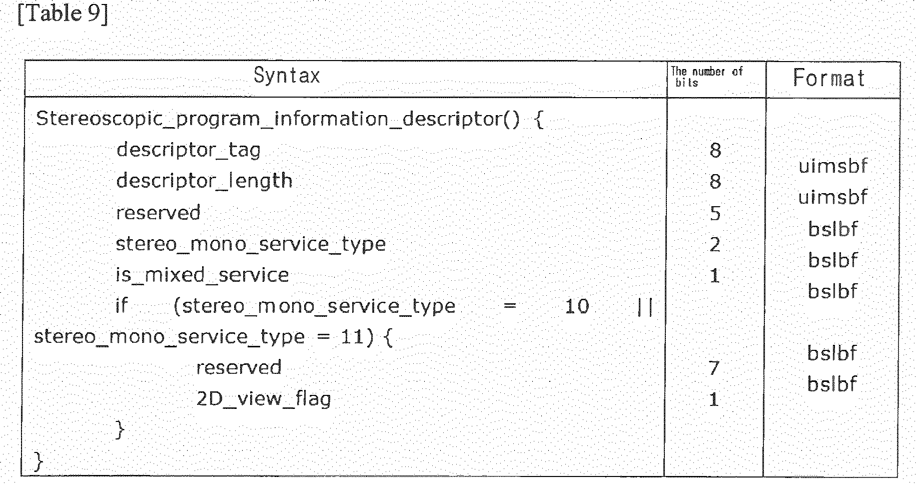

It can be additionally appreciated from FIG. 9 whether the 2D service and the 3D service are mixed in the same program by addition the syntax, is_mixed_service, unlike FIG. 7.

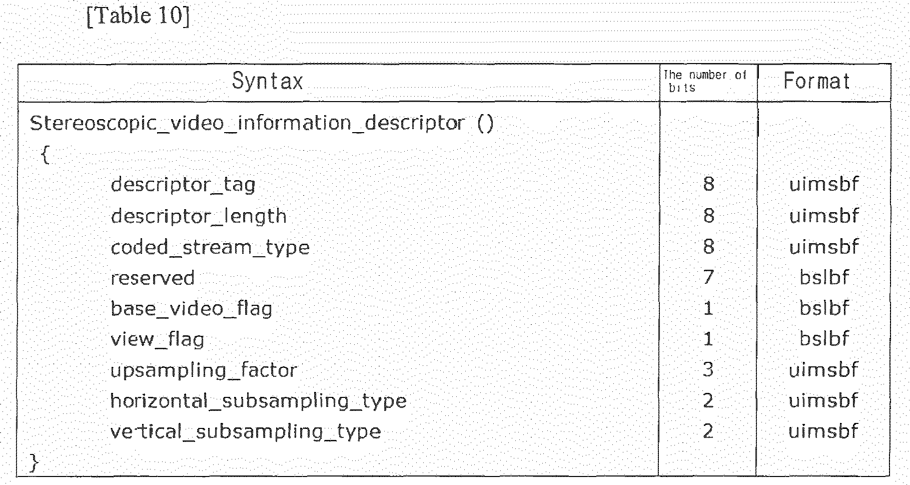

Table 10 is the same as Table 8 and may be used by applying the above-mentioned ES level descriptor to both of the reference video and the additional video or to only the additional video.

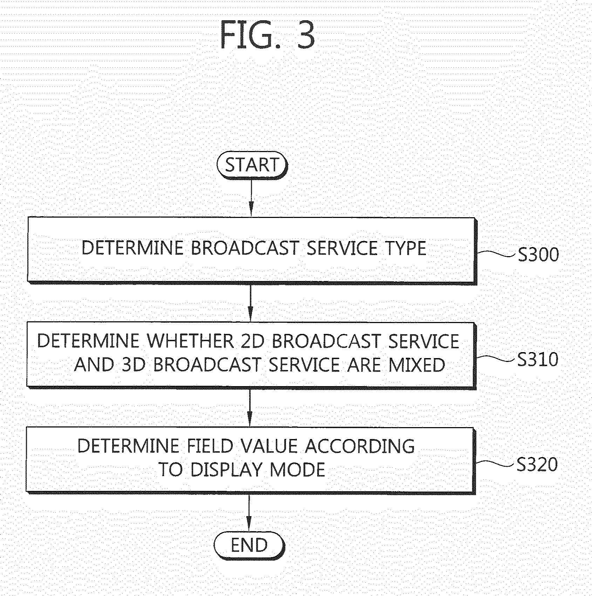

FIG. 3 is a flow chart showing a method of encoding and decoding the program level descriptor according to the exemplary embodiment of the present invention.

Referring to FIG. 3, the method determines the broadcast service type (S300).

The method determines whether the broadcast service type is the 2D service or the Frame-compatible 3D service or the Service-compatible 3D service by determining Stereo_mono_service_type.

The method determines whether the 2D broadcast service and the 3D broadcast service are mixed (S310).

When providing the broadcast service, the 2D broadcast contents and the 3D broadcast contents are mixed and encoded or only the 3D broadcast contents may be encoded and the information on the scheme of mixing the broadcast contents may be determined.

The method determines the field value depending on the display mode (S320).

When the display of the 2D mode is performed based on the received 3D broadcast service contents, the method determines the field value determining whether the reference video is displayed or the additional video is displayed to output the corresponding video.

According to another exemplary embodiment of the present invention, the program level descriptor and the ES level descriptor are each configured as the following Tables 11 and 12 by using the above-mentioned syntax element information and may be signaled.

In the case of Service_compatible, Tables 11 and 12 are to specify Elementary_PID of the video streams corresponding to the reference video and the additional video, wherein linked_elementary_PID may be further included in the ES level descriptor.

Table 11 represents Program_level_descriptor.

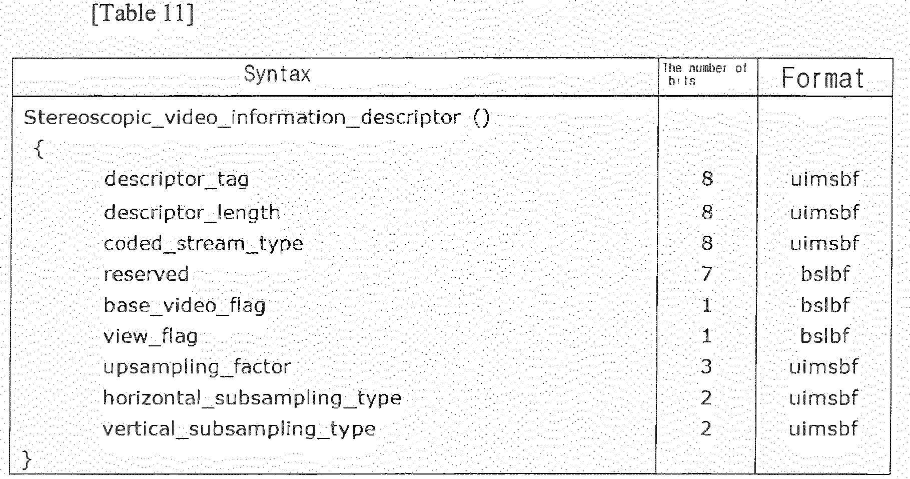

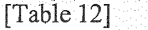

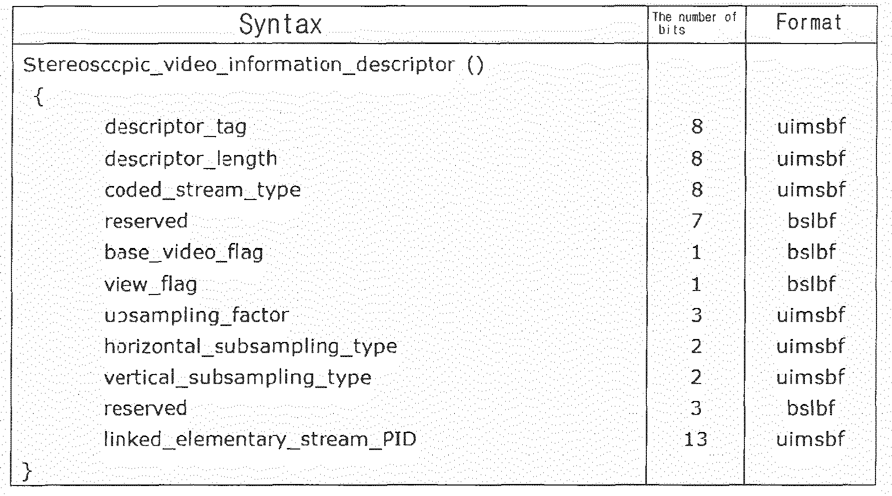

Referring to Table 12, linked_elementary_stream_PID is included and the PID of the reference video stream corresponding to the additional video stream or the PID of the additional video stream corresponding to the reference video stream are shown.

That is, in the case of the Service Compatible, the 3D service may be configured to include the reference video stream and the additional video stream and thus, may be subjected by the encoding and decoding by linking the PID value.

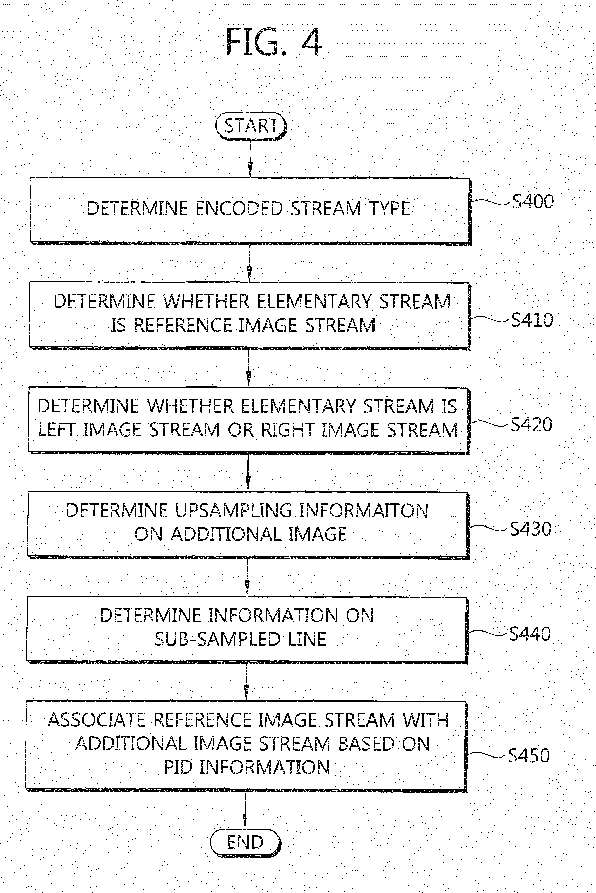

FIG. 4 is a flow chart showing a method of encoding and decoding the ES level descriptor according to the exemplary embodiment of the present invention.

Referring to FIG. 4, the method determines the encoded stream type (S400).

The method determines a method of encoding an additional video. The encoding method of the additional video may use the encoding method disclosed in ISO/IEC 13818-1 MPEG-2 Systems:2007.

The method determines whether the elementary stream is the reference video stream (S410).

The method represents whether the elementary stream is the reference video stream or the additional video stream.

The method determines whether the elementary stream is the left video stream or the right video stream (S420).

In the case of the stereoscopic video, the left video and right video streams may be present and the video information may be determined.

The method determines the upsampling information on the additional video (S430).

In order to perform the upsampling based on the additional video information transmitted by being down-sampled, the method may determine the information on whether or not to use any upsampling method.

The method determines the information on the sub-sampled line (S440).

The sub-sampling for the additional video may be sub-sampled in horizontal or vertical directions and when the sub-sampling is performed, the method may determine whether even or odd line is sub-sampled.

The method associates the reference video stream with the additional video stream based on the PID information (S450).

The method associates the PID information so as to perform synchronization between the decoded reference video stream and the additional video stream.

According to another exemplary embodiment of the present invention, the ES level descriptor are each configured as the following Tables 13 and 14 by using the above-mentioned syntax element information and may be signaled.

As in Tables 7 and 9, the case of the program level descriptor may selectively apply and use the inclusion or not of the is_mixed_service that is the syntax element representing whether the 2D service and the 3D service are mixed.

The case of the ES level descriptor is divided into Stereoscopic_base_video_information_descriptor() , as in the following Table 13 or Stereo_supplimentary_video_information_descriptor() as in the following Table 14 by the descriptor. One thereof may be used for the reference video and the other thereof may be used for the additional video.

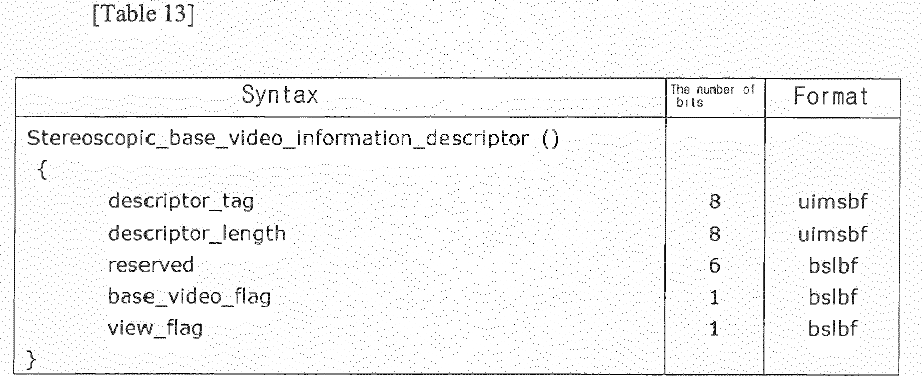

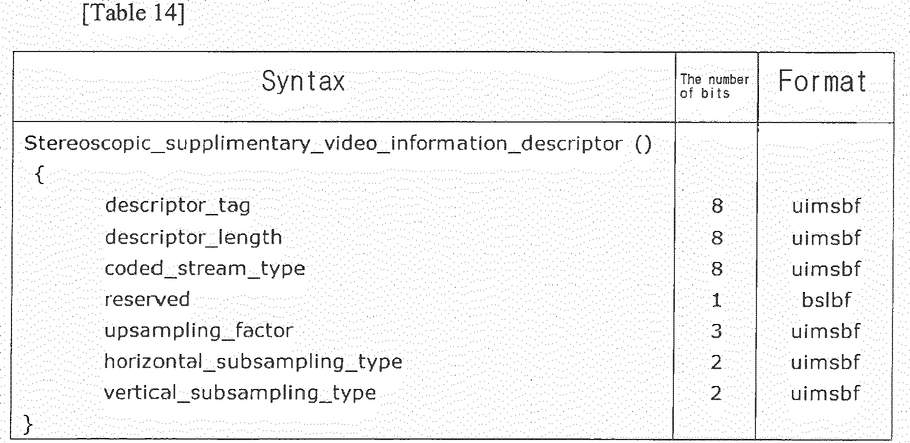

Table 13 includes the base_video_flag that is the syntax element information used for the elementary video and Table 14 may divide the syntax element used for the elementary video and the syntax element used for the additional video by including upsampling_factor, horizontal_subsampling_type, and vertical_subsampling_type that are the syntax element information used for the additional video.

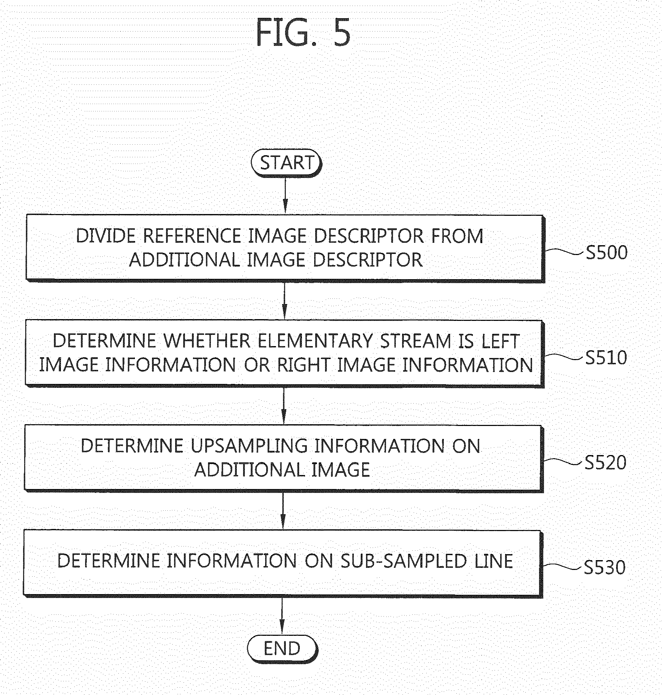

FIG. 5 is a flow chart showing an elementary stream level descriptor according to the exemplary embodiment of the present invention.

Referring to FIG. 5, the method divides a reference video descriptor and an additional video descriptor (S500).

The elementary stream level descriptor may be divided into the reference video descriptor and the additional video descriptor and may decode the syntax element information necessary therefor, respectively.

The method determines the bit stream is the left video information or the right video information (S510).

In the reference video descriptor, the method determines whether the corresponding bit stream is the information corresponding to the right video or the information corresponding to the left video.

In the case of the additional video descriptor, procedures following step S520 may be performed.

After the encoded stream type is determined, the method determines the upsampling information on the additional video (S520).

In order to perform the upsampling based on the additional video information transmitted by determining the encoded stream type and being down-sampled, the method may determine the information on whether or not to use any upsampling method.

The method determines the information on the sub-sampled line (S530).

The sub-sampling for the additional video may be sub-sampled in horizontal or vertical directions and when the sub-sampling is performed, the method may determine whether even or odd line is sub-sampled.

When a field dividing whether the corresponding ES is the left video stream or the right video stream is '1', the corresponding ES represents the left video and when a field is '0', the corresponding stream represents the right video.

According to another exemplary embodiment of the present invention, the ES level descriptor are each configured as the following Tables 15 and 16 by using the above-mentioned syntax element information and may be signaled.

The case of the ES level descriptor is divided into Stereoscopic_base_video_information_descriptor() , as in the following Table 15 or Stereo_supplimentary_video_information_descriptor() as in the following Table 16 by the descriptor. One thereof may be used for the reference video and the other thereof may be used for the additional video.

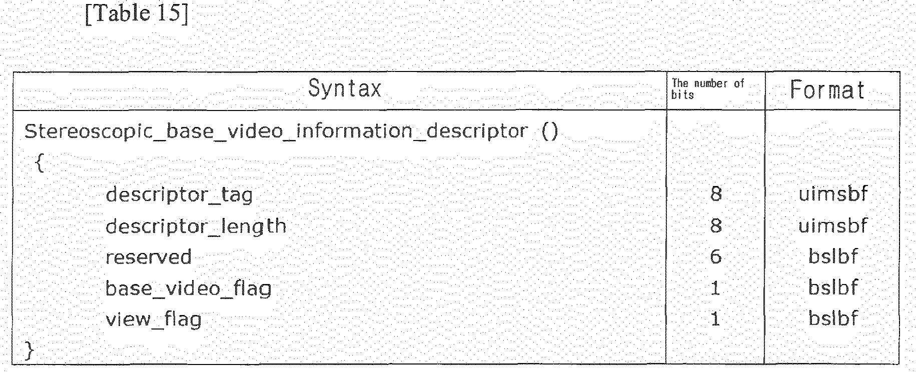

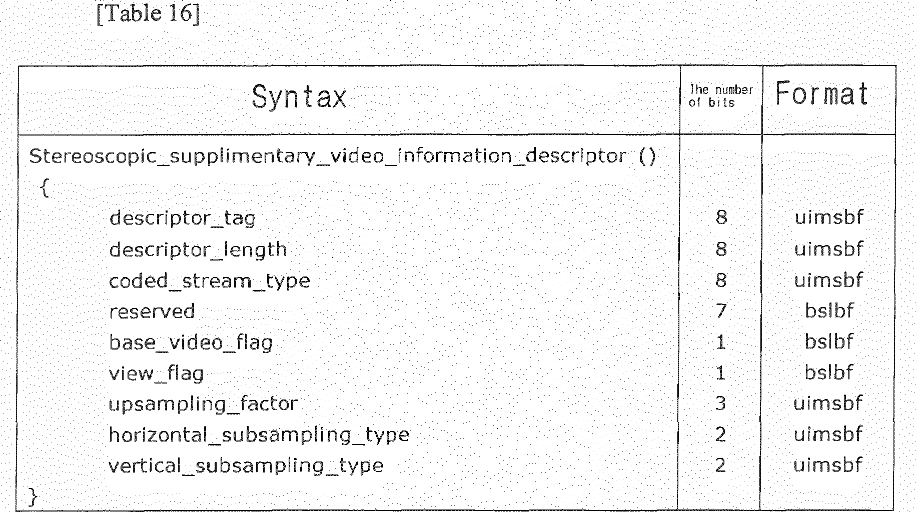

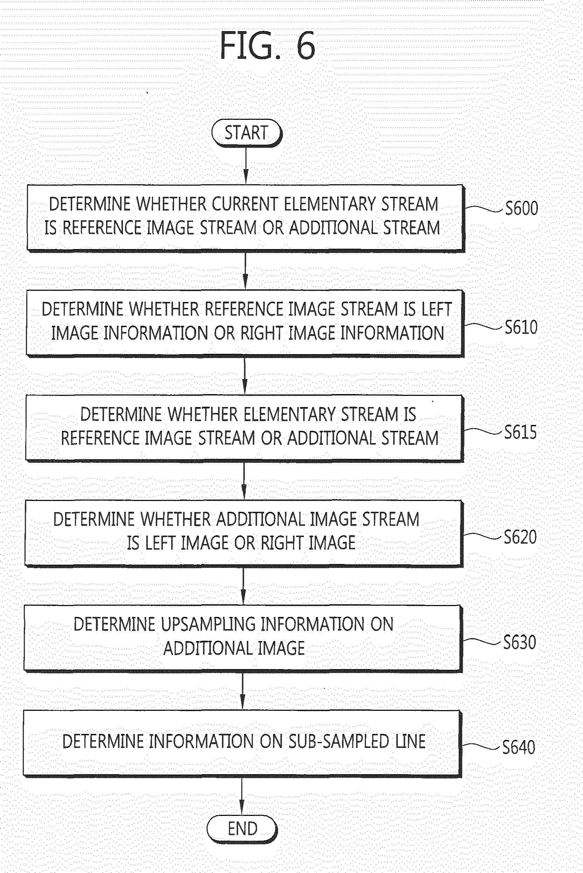

FIG. 6 is a flow chart showing the elementary stream level descriptor according to the exemplary embodiment of the present invention.

Referring to FIG. 6, the descriptor may be encoded and decoded by dividing the reference video descriptor and the additional video descriptor. The stream level descriptor may be divided and decoded into the reference video descriptor and the additional video descriptor and may decode the syntax element information necessary therefor, respectively.

The method determines whether the current elementary stream is the reference video stream or the additional stream (S600).

The reference video descriptor may be applied in the case of the reference video stream.

The method determines the reference video stream is the left video information or the right video information (S610). In the case of the reference video stream, the method determines whether the reference video stream is the information corresponding to the right video or the information corresponding to the left video by using the reference video descriptor.

The method determines the encoded stream type in the additional video descriptor and determines whether the current elementary stream is the reference video stream or the additional stream (S615).

The method determines whether the additional video stream is the left video or the right video (S620).

The method determines whether the additional video is the left video or the right video based on the additional video stream information.

The method determines the upsampling information on the additional video (S630).

In order to perform the upsampling based on the additional video information transmitted by being down-sampled, the method may determine the information on whether or not to use any upsampling method.

The method determines the information on the sub-sampled line (S640).

The sub-sampling for the additional video may be sub-sampled in horizontal or vertical directions and when the sub-sampling is performed, the method may determine whether even or odd line is sub-sampled.

When a field dividing whether the corresponding ES is the left video stream or the right video stream is '1', the corresponding ES represents the left video and when a field is '0', the corresponding stream represents the right video.

According to another exemplary embodiment of the present invention, the ES level descriptor are each configured as the following Tables 17 and 18 by using the above-mentioned syntax element information and may be signaled.

The case of the ES level descriptor is divided into Stereoscopic_base_video_information_descriptor() , as in the following Table 17 or Stereo_supplimentary_video_information_descriptor() as in the following Table 18 by the descriptor. One thereof may be used for the reference video and the other thereof may be used for the additional video.

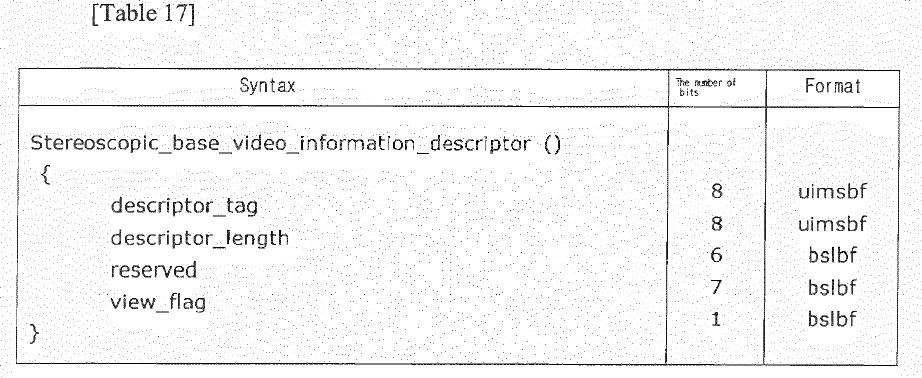

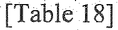

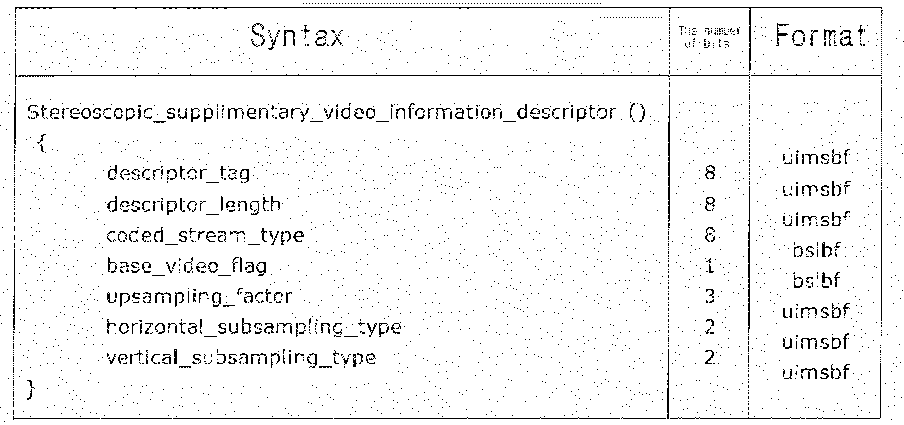

Unlike FIG. 6, Tables 17 and 18 may not perform a process of determining whether the reference video stream is the reference video in the reference video descriptor and may not perform a process of determining whether the additional video stream is the left video or the right video in the additional video descriptor.

According to another exemplary embodiment of the present invention, the ES level descriptor are each configured as the following Tables 19 and 20 by using the above-mentioned syntax element information and may be signaled.

The case of the ES level descriptor is divided into Stereoscopic_base_video_information_descriptor() , as in the following Table 19 or Stereo_supplimentary_video_information_descriptor() as in the following Table 20 by the descriptor. One thereof may be used for the reference video and the other thereof may be used for the additional video.

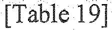

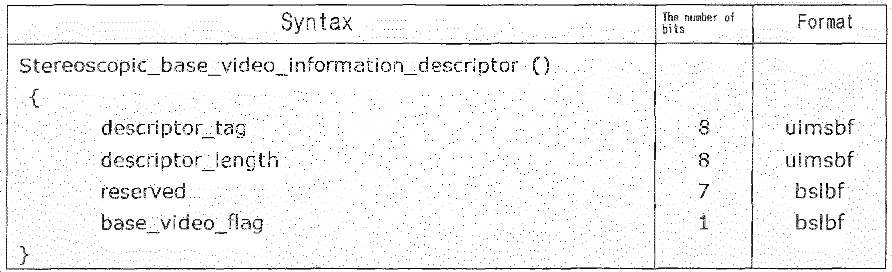

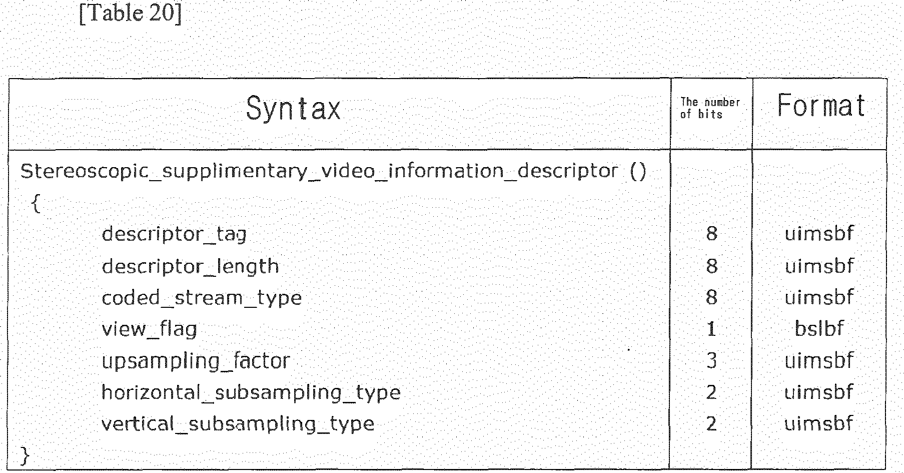

Referring to Tables 19 and 20, the based_video_flag may be used instead of view_flag in the reference video descriptor and the view_flag may be used instead of the based_video_flag in the additional video descriptor, as compared with Tables 17 and 18.

As another exemplary embodiment of the present invention, in Tables 13, 14, 15, 16, 17, 18, 19, and 20, in the case of the Service_compatible, in order to specify the Elementary_PID of the video stream corresponding to the reference video and the additional video, linked_elementary_stream_PID may be further included in Stereoscopic_supplimentary_video_information_descriptor() and linked_elementary_stream_PID may be further included in Stereoscopic_base_video_information_descriptor().

In addition, in Tables 13, 14, 15, 16, 17, 18, 19, and 20, in the case of the Service_compatible, the 2D-view_flag may be included in Stereoscopic_program_information_descriptor() specified in Tables 7, 9, and 11 in Stereoscopic_supplimentary_video_information_descriptor(). In this case, the 2D-view_flag may be excluded from the Stereoscopic_program_information_descriptor().

As another exemplary embodiment, in the ES level descriptor, the coded_stream_type may not be used in consideration of the relationship with the stream_type defined outside the descriptor and when the coded_stream_type is not used, the coded_stream_type is excluded from the ES level descriptor defined in the exemplary embodiments, This may be applied to all the embodiments including the coded_stream_type.

The additional signaling for the case in which the stereoscopic video services are provided through two channels may be performed.

Two video streams provided for the stereoscopic video service, that is, the reference video stream and the additional video stream may each be transmitted through a separate channel. In this case, the following information for representing the relationship between the two channels and the video stream is needed. The information may be selectively used as needed.

linked_transport_stream_present_flag is a field representing whether one of the two ESs configuring the stereoscopic video stream is transmitted to the separate channel. The case in which the linked_transport_Stream_present_flag is '1' may represent that the separate channel is used and the case in which the lmked_transport_stream_present_flag is '0' may not represent that the separate channel is not used. That is, it can be represented that the two ESs are transmitted to the current channel. The additional channel may be set to be '0' even though the reference video is transmitted to the separate channel according to applications.

Reference_view_present_flag is a field differentiating whether the reference video stream is included in the current channel. The case in which the reference_view_present_flag is '1' may represent that the reference video stream is included in the current channel and the case in which the reference_view_present_flag is '0' may represent that the reference video stream is not included in the current channel.

transport_stream_id represents the ID of the TS including the ES transmitted to the separate channel. program_number represents the field defining the program including the ES transmitted to the separate channel.

The information may be signaled by being included in the PMT or may be signaled through the NIT and may also be provided through the service standard, for example, ATSC standard (VCT or EIT).

The case in which the information is included in the PMT is as the following Table 21.

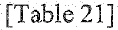

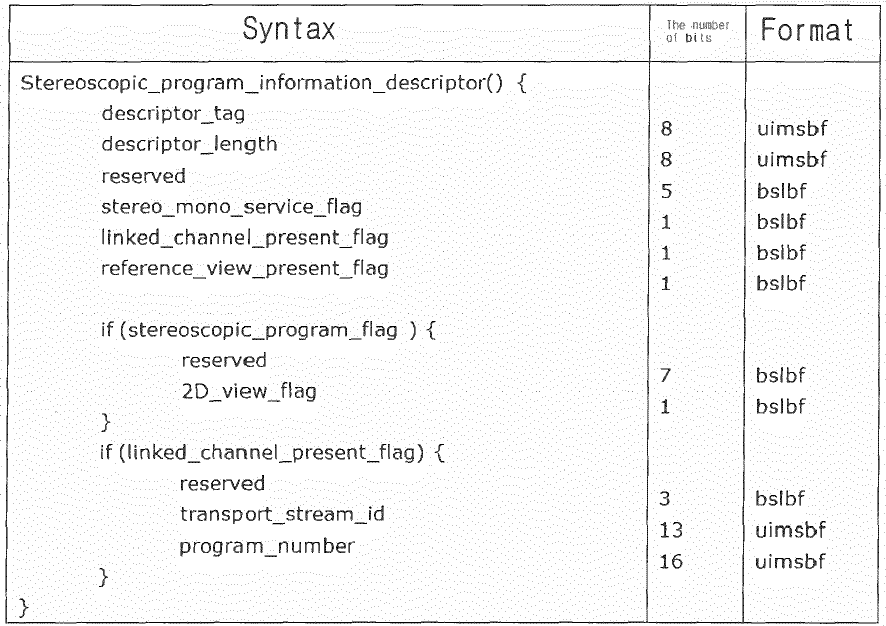

Table 21 shows an example of the program level descriptor according to the exemplary embodiment of the present invention. In this case, linked_transport_stream_present_flag, reference_view_present_flag, and transport_stream_id, program_number may be selectively used and may be used together with the definition of the program level descriptor defined in the above-mentioned Table.

In the descriptor decoding method according to the exemplary embodiment of the present invention, the additional signaling for the case in which the stereoscopic video services are provided through two channels may be performed. Two video streams provided for the stereoscopic video service, that is, the reference video stream and the additional video stream may each be transmitted through a separate channel. In this case, the following additional information for representing the relationship between the two channels and the video stream may be used. The following information may be selectively used as needed.

**linked_transport_stream_present_flag** is a field representing whether one of the two elementary streams ESs configuring the stereoscopic video stream is transmitted to the separate channel. The case in which the linked_transport_stream_present_flag is '1' may represent that the separate channel is used and the case in which the linked_transport_stream_present_flag is '0' may not represent that the separate channel is not used. That is, it can be represented that the two ESs are transmitted to the current channel. The additional channel may be set to be '0' even though the reference video is transmitted to the separate channel according to applications.

**The reference_view_present_flag** is a field differentiating whether the reference video stream is included in the current channel. The case in which the reference_view_present_flag is '1' may represent that the reference video stream is included in the current channel and the case in which the reference_view_present_flag is '0' may represent that the reference video stream is not included in the current channel.

**The transport_stream_id** represents the ID of the TS including the ES transmitted to the separate channel.

**The program_number** represents the field defining the program including the ES transmitted to the separate channel.

The information may be signaled by being included in the PMT or may be signaled through the NIT and may also be provided through the service standard, for example, ATSC standard (VCT or EIT).

The exemplary embodiments of the case in which the information is included in the PMT is as the following Table 22.

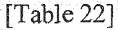

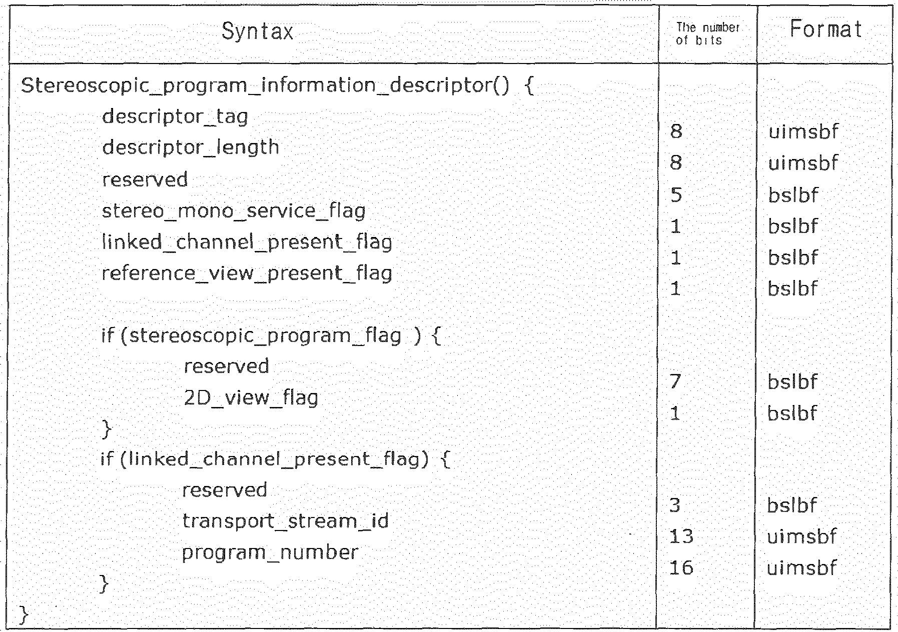

The descriptor in the exemplary embodiment of the present invention is an example of the program level descriptor. In this case, the linked_transport_stream_present_flag, the reference_view_present_flag, and the transport_stream_id, program_number may be selectively used and may be used together with the definition of the program level descriptor defined in the exemplary embodiments 1 to 3.

FIG. 7 is a block diagram showing an apparatus for encoding stereoscopic videos by adding a descriptor according to another embodiment of the present invention.

Hereinafter, the stereoscopic encoding and decoding apparatus shows only the case in which the left video and the right video are separately encoded into the two frames but the stereoscopic encoding and decoding apparatus may show the case in which the left video and right video may be configured by the single frame, which is included in the scope of the present invention.

Referring to FIG. 7, the stereoscopic encoding apparatus may include a left video encoder 700, a right video encoder 705, an audio encoder 710, a packetized elementary stream (PES) packetizer 715, a multiplexer 720, and a section generator 725.

The left video encoder 700 encodes the left video and the calculated left video ES may be transmitted to the PES packetizer 715.

The right video encoder 705 encodes the right video and the calculated right video ES may be transmitted to the PES packetizer 715.

The audio encoder 710 encodes the audio and the calculated audio ES may be transmitted to the PES packetizer 715.

The PES packetizer 715 may perform the PES packetizing on the left video ES, the right video ES, and the audio ES and may transmit the PES packetized to the multiplexer 720.

The section generator 725 chooses the program specification information, that is, any ones of the plurality of programs to take any packet and transmit the PSI section that is the information on how to decode any packet to the multiplexer.

The multiplexer 720 may multiplex the transmitted left video PES packet, right video PES packet, and audio PES packet. In this case, the bit stream may be generated by adding the descriptor such as the program_level_descriptor and the ES level descriptor according to the exemplary embodiments of the present invention and multiplexing them based on various syntax element information, thereby generating the bit stream.

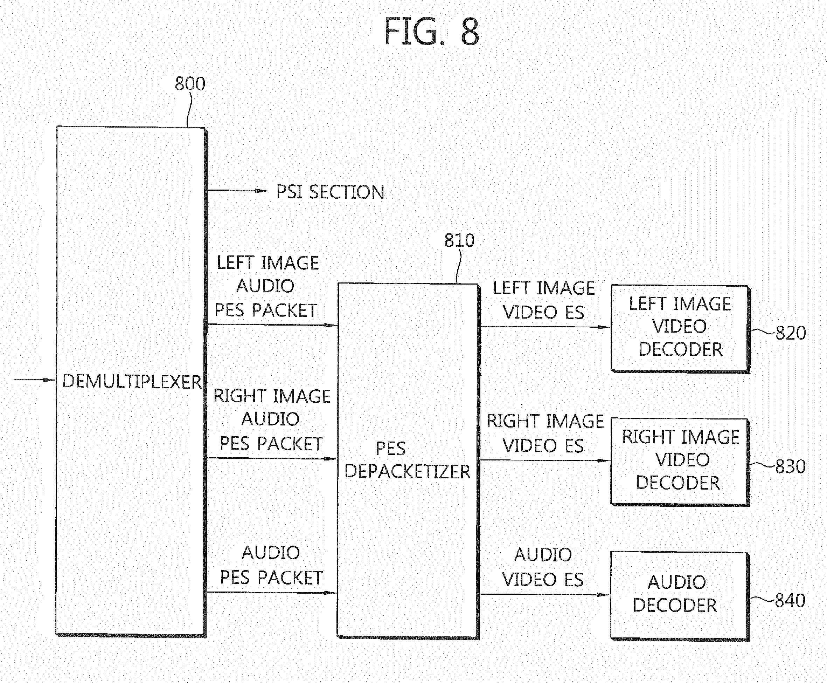

FIG. 8 is a block diagram showing an apparatus for decoding stereoscopic videos by adding a descriptor according to another embodiment of the present invention.

The demultiplexer 800 performs the demultiplexing based on the transmitted bit stream information to calculate each of the PES packet and the section information with the PSI section, the left video PES packet, the right video PES packet, and the audio PES packet. At the time of performing the demultiplexing, the bit stream may be generated by adding the descriptor such as the program_level_descriptor and the ES level descriptor according to the exemplary embodiments of the present invention and demultiplexing them based on various syntax element information, thereby generating the bit stream.

The PES depacketizer 810 depacketizes the left video PES packet, the right video PES packet, and the audio PES packet that are demultiplexed in the demultiplexer 800, thereby generating the left video ES, the right video ES, and the audio ES.

The left video decoder 820 may decode the left video PES packet calculated in the PES depacketizer 810 to output the left video.

The right video decoder 830 may decode the right video PES packet calculated in the PES depacketizer 810 to output the right video.

The audio decoder 840 may decode the audio PES packet calculated in the PES packetizer 810 to output the audio.

Although the preferred embodiments of the present invention have been disclosed for illustrative purposes, those skilled in the art will appreciate that various modifications, additions and substitutions are possible, without departing from the scope and spirit of the invention as disclosed in the accompanying claims. Accordingly, such modifications, additions and substitutions should also be understood to fall within the scope of the present invention.

## Claims

1. A video decoding method, comprising:
determining stream information displayed at the time of using a broadcast service type and a 2D display mode in decoding a program level descriptor; and
determining an encoded stream type, whether an elementary stream is a reference stream, whether the elementary stream is a left video or a right video, upsampling information of additional videos, and information on a sub-sampled line in decoding an elementary stream level descriptor.

2. The video decoding method of claim 1, further comprising
determining whether 2D broadcast service and 3D broadcast services are mixed in decoding the program level descriptor; and
associating a reference video stream with an additional video stream based on PID information in decoding the elementary stream level descriptor.

3. The video decoding method of claim 1, further comprising at least one of:
determining whether at least one of two elementary streams is transmitted to a separate channel in decoding the program level descriptor;
decoding ID values of transmission streams including the elementary stream transmitted to the separate channel;
decoding ID values defining a program including the elementary stream transmitted to the separate channel; and
determining whether the reference video stream is included in a current channel.

4. The video decoding method of claim 1, further comprising:
determining field information for identifying appropriate videos at the time of watching the 3D video contents using the 2D display mode.

5. A video decoding method, comprising:
determining whether an elementary stream is a left video or a right video in decoding a reference video descriptor at the elementary stream level; and
determining upsampling information on additional videos and determining sub-sampling line information on the additional videos in decoding the additional video descriptor at the elementary stream level.

6. The video decoding method of claim 5, further comprising:
determining whether the elementary stream is the left video or the right video in decoding the additional video descriptor at the elementary stream level.

7. The video decoding method of claim 5, further comprising:
determining a type of the encoded stream in decoding the additional video descriptor at the elementary stream level.

8. The video decoding method of claim 5, further comprising:
determining whether the elementary stream is the reference video stream or the additional video stream.

9. The video decoding method of claim 5, further comprising:
associating the reference video stream with the additional video stream based on PID information in decoding the additional video descriptor at the elementary stream level.

10. The video decoding method of claim 5, further comprising:
associating the reference video stream with the additional video stream based on PID information in decoding the reference video descriptor at the elementary stream level.

11. The video decoding method of claim 5, further comprising:
determining whether the 2D broadcast service and the 3D broadcast service are mixed in decoding the additional video descriptor at the elementary stream level.

12. A decoding apparatus, comprising:
a demultiplexer that de-multiplexes a left video packetized elementary stream (PES) packet, a right video PES packet, and an audio PES packet by decoding a program level descriptor and an elementary stream level descriptor, respectively; and
a PES depacketizer that depacketizes the demultiplexed left video PES packet, right video PES packet, and audio PES packet to generate a left video elementary stream, a right video elementary stream, and an audio elementary stream.

13. The decoding apparatus of claim 12, wherein the demultiplexer performs demultiplexing by receiving field value information according to stream information displayed at the time of a broadcast service type and a 2D display mode in the program level descriptor and receiving informaiton on an encoded stream type, whether the elementary stream is a reference stream, whether the elementary stream is a left video or a right video, upsampling information on the additional video, and information on the subsampled line, in the elementary stream level descriptor.

14. The decoding apparatus of claim 13, wherein the demultiplexer determines whether the 2D broadcast service and the 3D broadcast service are mixed in the program level descriptor and associates the reference video stream with the additional video stream based the PID information in decoding the elementary stream level descriptor.

15. The decoding apparatus of claim 12, wherein the demultiplexer determines whether the elementary stream is the left video or the right video in decoding the reference video descriptor at the elementary stream level, the upsampling information on the additional video in decoding the additional video descriptor at the elementary stream level, and the sub-sampling line information on the additional video.

16. The decoding apparatus of claim 15, wherein the demultiplexer determines whether the elementary stream is the left video or the right video in decoding the additional video descriptor at the elementary stream level.

17. The decoding apparatus of claim 15, wherein the demultiplexer determines whether the elementary stream is the reference video stream or the additional video stream.

18. The decoding apparatus of claim 15, wherein the demultiplexer associates the reference video stream with the additional video stream based on the PID information in decoding the reference video descriptor at the elementary stream level.

19. The decoding apparatus of claim 15, whether the demultiplexer determines whether the 2D broadcast service and the 3D broadcast service are mixed in decoding the additional video descriptor at the elementary stream level.

20. The decoding apparatus of claim 12, whether the demultiplexer determines whether at least one of two elementary streams is transmitted to a separate channel in decoding the program level descriptor and decodes ID values of transmission streams
including the elementary stream transmitted to the separate channel and a field value defining a program including the elementary stream transmitted to the separate channel.
